# EUROPÄISCHE PATENTANMELDUNG

(11) **EP 1 925 707 A2**
(43) Veröffentlichungstag der Anmeldung: **28.05.2008**
(21) Anmeldenummer: 07021516.5
(22) Anmeldetag: 06.11.2007
(51) Int. Cl.: D06F 37/26

(54) **Kunststoffbehälter, Kunststofflaugenbehälter für eine Waschmaschine und Verfahren zur Herstellung eines Kunststoffbehälters**

(30) Priorität: 22.11.2006 DE 102006055419
(71) Anmelder: Miele & Cie. KG, 33332 Gütersloh (DE)
(72) Erfinder: Hollenhorst, Matthias, 59556 Lippstadt (DE)

(57) **Zusammenfassung**

Die Erfindung betrifft einen Kunststoffbehälter bzw. Kunststofflaugenbehälter (2) für eine Waschmaschine (1) umfassend ein zylinderförmig geformtes Behältnis, welches aus einer spritzgegossenen Kunststoffmasse (6) besteht mit einem Mantel und zumindest mit einer Stirnwand (7), und wobei sich während des Spritzgießens durch aufeinander treffende Fließfronten (9.1) und (9.2) des Schmelzflusses der Kunststoffmasse (6) ergebende Bindenähte (10) bilden. Dabei weist die Wand (13) des Kunststofflaugenbehälters (2) in dem Bereich der Behälterwand, in dem sich die Bindenaht (10) einstellt, ein Profil auf, so dass die aufeinander treffenden Fließfronten (9.1) und (9.2) eine verzahnte Bindenaht (10) eingehen oder bilden. Die Erfindung betrifft auch ein Verfahren zur Herstellung eines Kunststoffbehälters bzw. eines Kunststofflaugenbehälters (2) für eine Waschmaschine unter Verwendung einer Spritzgussform.

## Beschreibung

Die Erfindung betrifft einen Kunststoffbehälter umfassend ein zylinderförmig geformtes Behältnis, welches aus einer spritzgegossenen Kunststoffmasse besteht mit einem Mantel und zumindest mit einer Stirnwand, und wobei sich während des Spritzgießens durch aufeinander treffende Fließfronten des Schmelzflusses der Kunststoffmasse ergebende Bindenähte bilden.

So ist aus dem Stand der Technik gemäß der DE 10 2005 019 414 B3 ein Kunststoffbehälter, hier ein Kunststofflaugenbehälter für eine Waschmaschine, bekannt. Bei der Herstellung des bekannten Kunststofflaugenbehälters wird in eine Form eine Kunststoffschmelze injiziert, wobei die injizierte Kunststoffmasse in der Form Teilströme einnimmt, welche in der Form aufeinander treffen, so dass sich Bindenähte bilden. Um insbesondere die Bindenahtbildung begünstigend zu beeinflussen ist hierzu beispielsweise aus der DE 10 2005 018 190 B3 ebenfalls ein Kunststofflaugenbehälter für eine Waschmaschine sowie das Verfahren zur Herstellung des Kunststofflaugenbehälters bekannt. Bei dieser dort beschriebenen Lösung geht es insbesondere um die begünstigende Einbindung des Lagerkreuzes in der Stirnwand. Hierzu weist insbesondere das Lagerkreuz Profilierungen auf, die den Schmelzfluss der Kunststoffmassen-Teilströme in eine vorbestimmte Richtung lenken, so dass die aufeinander treffenden Fließfronten des Schmelzflusses Bindenähte eingehen, die von der Nabe und/oder den Streben des Lagerkreuzes beabstandet ausgebildet sind.

Beim Spritzgussprozess des Laugenbehälters kommt es zwangsläufig an Durchbrüchen, wie zum Beispiel an der Einfüllöffnung, dem Ablaufstutzen oder dem Motorhalter, zu diesen Bindenähten. An diesen Stellen teilt sich der Schmelzfluss in zumindest zwei Teilströme auf, die hinter bzw. unter dem jeweiligen Durchbruch wieder zusammentreffen, wodurch sich die Bindenaht einstellt. Diese können in hoch beanspruchten Bereichen des Laugenbehälters eine Schwachstelle darstellen, da diese Stelle wie eine Klebestelle wirkt und keine homogene Materialzusammensetzung hat. Um diesen Schwachstellen gerecht zu werden, wird versucht durch Materialaufdickung lokal die Bindenaht zu entlasten. Dabei entsteht jedoch das Problem, dass eine lokale Aufdickung wiederum größere Eigenspannungen im Werkstoff hervorrufen. Außerdem werden durch den großen Steifigkeitssprung im angrenzenden Bereich der Aufdickung Biegebeanspruchungen verursacht, die sich nachteilig auswirken.

Der Erfindung liegt somit die Aufgabe zugrunde, einen Kunststoffbehälter bereit zu stellen, der die geschilderten Nachteile überwindet und eine verbesserte Stabilität aufweist. Der Erfindung liegt ferner die Aufgabe zugrunde, ein Verfahren zur Herstellung eines Kunststoffbehälters bereitzustellen.

Erfindungsgemäß wird dieses Problem mit den Merkmalen des Patentanspruchs 1 und den Merkmalen des unabhängigen Patentanspruchs 10 gelöst. Vorteilhafte Ausgestaltungen und Weiterbildungen der Erfindung ergeben sich jeweils aus den abhängigen Ansprüchen 2 bis 9 und 11 bis 13.

Die mit der Erfindung erreichbaren Vorteile bestehen darin, dass durch die Form der Bindenaht eine Optimierung der Belastungsaufnahmen verwirklicht wird. Dadurch ist die Bindenaht unempfindlicher gegenüber Zug- oder Biegebelastungen, wodurch die Stabilität erhöht wird und eine Verlängerung der Lebensdauer des Behälters erreicht wird.

Denn die Wand des Kunststoffbehälters bzw. Kunststofflaugenbehälters weist im Bereich der Bindenaht ein Profil auf, so dass die aufeinander treffenden Fließfronten eine verzahnte Bindenaht eingehen oder bilden. Dabei ist die Bindenaht verrippt ausgebildet, wobei die Verrippung stabförmig ausgebildet ist, und die eingeformten Stäbe in Fließrichtung der Fließfront parallel zueinander ausgerichtet sind. Um insbesondere das Fließbild in der hochviskosen Kunststoffschmelze entsprechend zu beeinflussen, sind die parallel zueinander eingeformten Rippen zueinander versetzt angeordnet, so dass sie einen überlappenden Teilbereich einnehmen. Hierzu werden im Bauteilbereich der Bindenaht zwei Reihen versetzt angeordneter Rippen vorgesehen. Die durch die Rippen bereitgestellte Querschnittserhöhung führt nun dazu, dass lokal der Strömungswiderstand sinkt und der Kunststoff dort schneller fließt, und somit gegenüber dem angrenzenden Bereich, der die normale Wanddicke besitzt, voreilt.

Die Erfindung betrifft ferner einen Kunststofflaugenbehälter für eine Waschmaschine sowie ein Verfahren zur Herstellung eines Kunststoffbehälters bzw. eines Kunststofflaugenbehälters für eine Waschmaschine zur Aufnahme einer darin drehbaren Trommel unter Verwendung einer Spritzgussform, wobei der Kunststofflaugenbehälter eine Behälterwand mit einem zylinderförmigen Mantel und zumindest eine den Mantel verschließende Stirnseitenwand aufweist, und wobei der Kunststoff im zentralen Bereich der Stirnseitenwand in die Form injiziert wird, so dass sich zumindest bereichsweise Teilströmungen mit Fließfronten bilden, die eine Bindenaht beim Aufeinandertreffen der Fließfronten eingehen.

Dabei werden die Teilströme durch das Profil der Behälterwand in der Spritzgussform derart beeinflusst, dass die aufeinander treffenden Fließfronten eine verzahnte Bindenaht bilden. Die Spritzgussform als solches ist dabei mit Verrippungen ausgestattet, so dass in Fließrichtung des Schmelzflusses des jeweiligen Teilstromes Strömungsdome gebildet werden, die sich in verzahnender Weise aufeinander zu bewegen. Im Bauteil werden im Bereich der Bindenaht zwei Reihen versetzt angeordneter Rippen vorgesehen. Die Querschnittserhöhung durch die Rippen führt nun dazu, dass lokal der Strömungswiderstand sinkt und der Kunststoff dort schneller fließt, und somit den angrenzenden Bereichen gegenüber voreilt. Somit ergeben sich insbesondere im Bindungsbereich die sich verzahnenden Dome.

In einer zweckmäßigen Ausführung haben die Rippen eine Breite von 0,5 cm bis 1 cm und sind im Abstand von 0,5 cm bis 2 cm zueinander angeordnet. In einer weiteren Ausführung haben die Rippen jeweils eine Länge im Bereich zwischen 4 cm bis 15 cm.

Dabei wird die Strömungsgeschwindigkeit der viskosen Kunststoffmasse des jeweiligen Teilstromes in den zueinander parallel eingeformten Rippen erhöht. Die Strömungsgeschwindigkeit der viskosen Kunststoffmasse des jeweiligen Teilstromes wird durch die Formgebung der Verrippung derart beeinflusst, dass infolge der zueinander parallel versetzt eingeformten Rippen ein Strömungsprofil hervorgerufen wird bzw. sich einstellt, so dass sich im nicht überlappenden Bereich der Rippen zunächst kleine Dome bilden, die sich im überlappenden Teilbereich der Rippen in zueinander vergrößernder Dome verzahnend zusammenfügen. Hierbei hat es sich als zweckmäßig ergeben, dass der überlappende Teilbereich zwischen 2 cm und 6 cm beträgt.

Ein Ausführungsbeispiel der Erfindung ist in den Zeichnungen rein schematisch dargestellt und wird nachfolgend näher beschrieben. Es zeigen:
- Figur 1: eine als Toplader ausgebildete Waschmaschine in geschnittener Seitenansicht;
- Figur 2: eine ebenfalls geschnittene Teilansicht eines Kunststofflaugenbehälters in einer Spritzgussform ;
- Figur 3: eine perspektivische Darstellung eines Kunststofflaugenbehälters mit angedeuteten aufeinander treffenden Fließfronten;
- Figur 4: eine weitere Darstellung eines Kunststofflaugenbehälters ebenfalls in der Perspektive mit angedeuteten Fließfronten im Bereich der Einfüllöffnung;
- Figur 5: eine weitere Darstellung des Kunststofflaugenbehälters gemäß der Figur 4, mit angedeuteten Fließfronten im Bereich des Ablaufstutzens;
- Figur 6: eine Einzeldarstellung der aufeinander treffenden Fließfronten im verrippten Bereich und
- Figur 7: eine geschnittene Teilansicht der Behälterwand ebenfalls im verrippten Bereich.

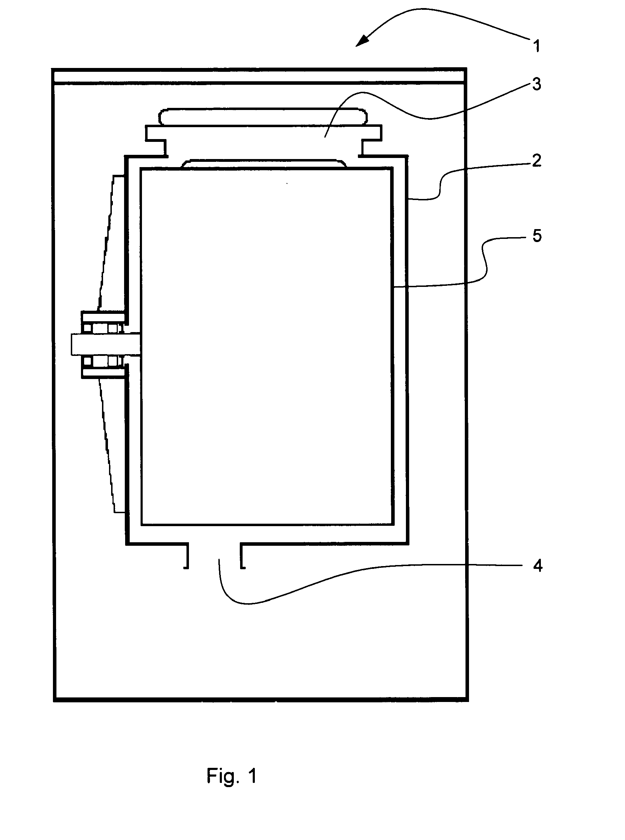

Die Figur 1 zeigt den Kunststoffbehälter anhand eines Kunststofflaugenbehälters 2 in einer Waschmaschine 1. In der Seitenansicht ist zu erkennen, dass der Kunststofflaugenbehälter 2 in der Waschmaschine 1 angeordnet ist. Der Kunststofflaugenbehälter 2 weist im oberen Bereich eine Einfüllöffnung 3 auf, sowie einen Ablaufstutzen 4 im unteren Bereich. In dem Kunststofflaugenbehälter 2 ist eine im Wesentlichen horizontal drehbar gelagerte Trommel 5 angeordnet.

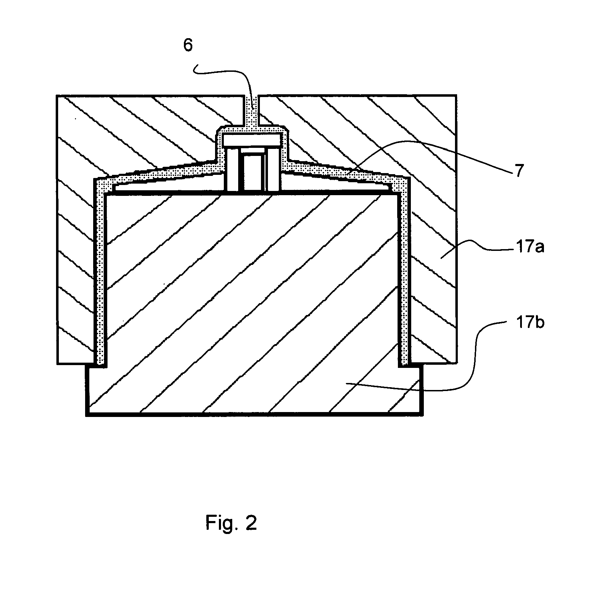

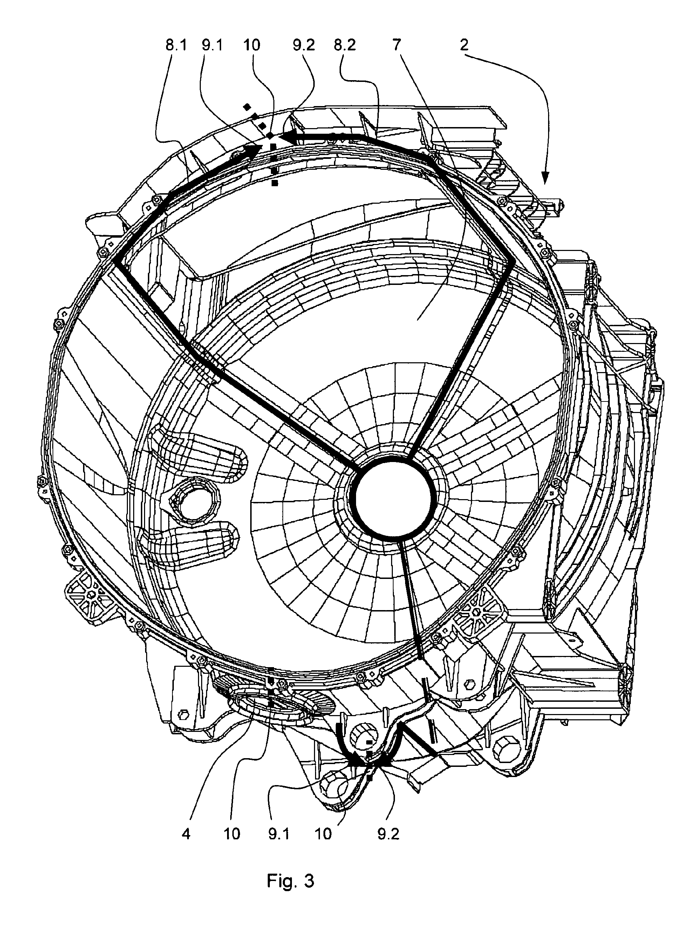

Die Figur 2 zeigt eine weitere Ansicht des Kunststofflaugenbehälters 2, wobei insbesondere bei dieser Abbildung die Spritzgussform 17a, 17b zur Herstellung eines derartigen Kunststofflaugenbehälters 2 dargestellt ist. Dabei wird der flüssige Kunststoff 6 im zentralen Bereich der Stirnseitenwand 7 injiziert. Dabei bilden sich zumindest bereichsweise Schmelzflüsse 8.1 und 8.2 mit Fließfronten 9.1 und 9.2, die dann Bindenähte 10 beim Aufeinandertreffen eingehen. Erkennbar wird dies insbesondere in der Figur 3 aus der Perspektive heraus, wo sich die während des Spritzgießens einstellenden Schmelzflüsse 8.1 und 8.2 ergeben, wie die Pfeile verdeutlichen, deren Fließfronten 9.1 und 9.2 des Schmelzflusses der Kunststoffmasse 6 Bindenähte 10 im Bereich der punktierten Linie eingehen.

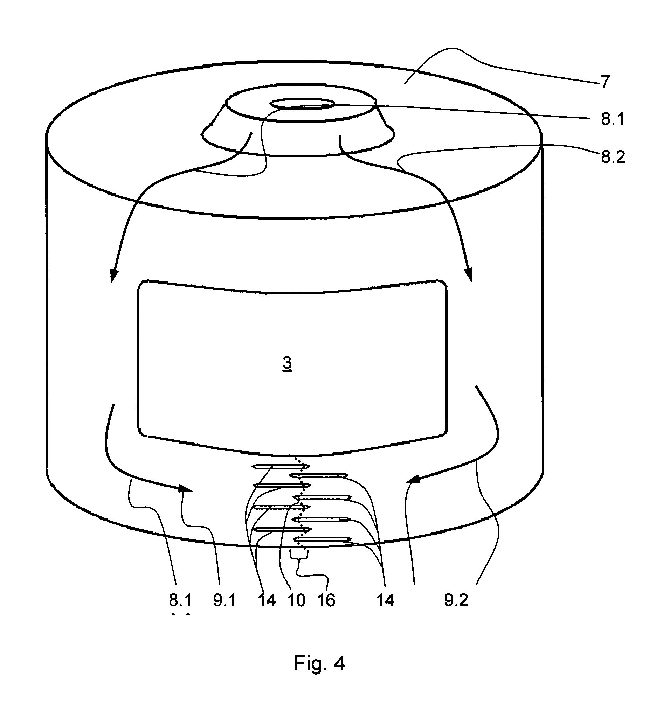

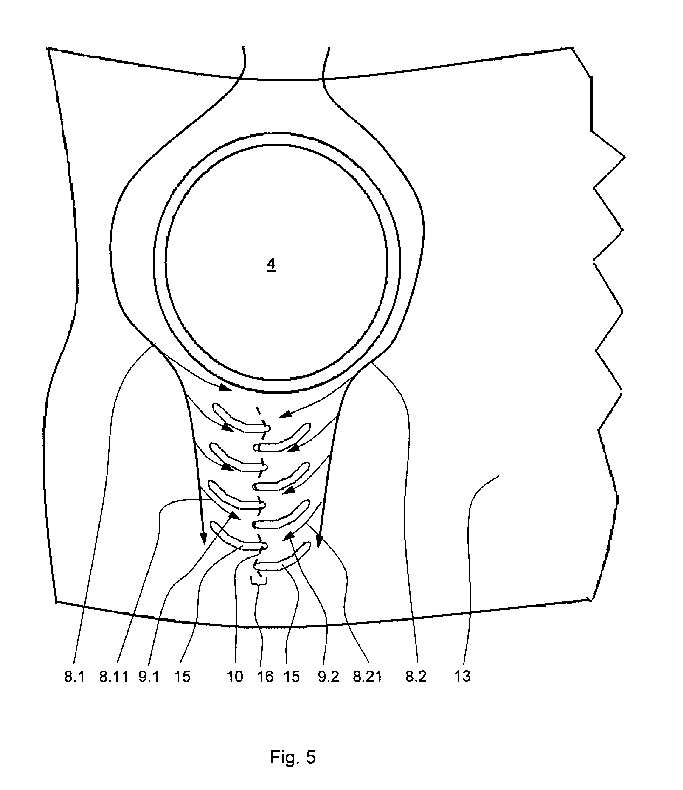

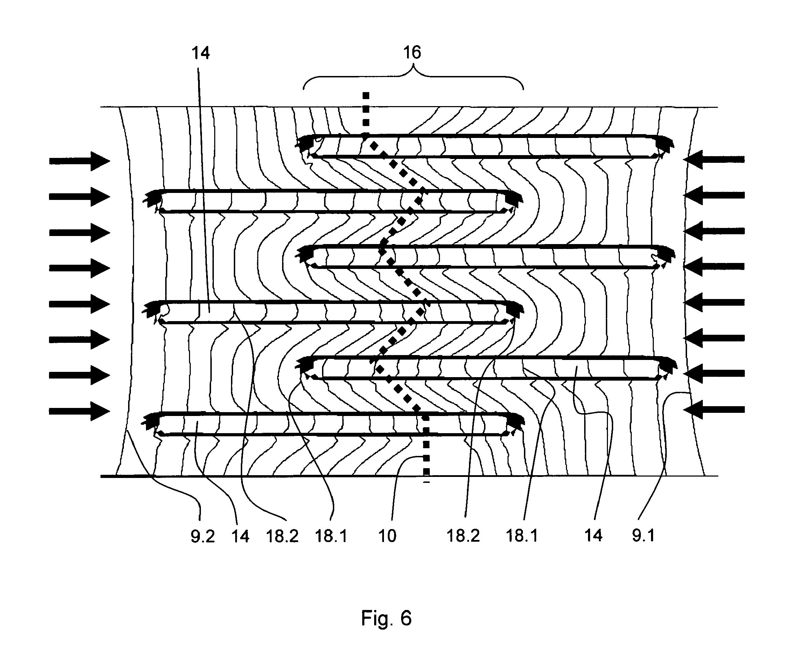

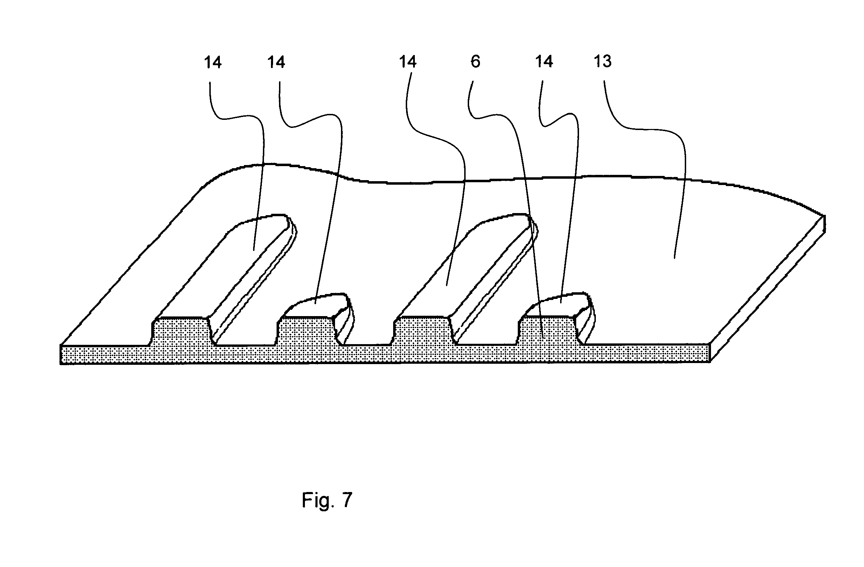

Wie in Figur 4 und 5 dargestellt, weist die Wand 13 des Kunststofflaugenbehälters 2 im Bereich der Bindenaht 10 ein Profil auf, welches im Schnitt (Fig. 7) unterschiedliche Dicken in der Behälterwand besitzt, so dass die aufeinander treffenden Fließfronten 9.1 und 9.2 eine verzahnte Bindenaht 10 eingehen oder bilden. In Figur 6 ist zu erkennen, dass die Bindenaht 10 verrippt ausgebildet ist. Die Verrippung 14, insbesondere dargestellt in der Figur 7, ist dabei stabförmig ausgebildet, wobei die eingeformten Rippen 14 dabei in Fließrichtung der Fließfronten 9.1, 9.2 und im Wesentlichen parallel zueinander ausgerichtet sind. Wie insbesondere aus der Figur 4, 5 und 6 zu erkennen ist, sind die parallel zueinander eingeformten Rippen 14 zueinander versetzt angeordnet, so dass sie einen überlappenden Teilbereich 16 einnehmen.

In Figur 5 ist dargestellt, wie die Rippen für im Wesentlichen parallel fließenden Schmelzflüsse 8.1, 8.2 optimiert ausgeführt sind. Hierbei sind die einzelnen Rippen 15 gekrümmt ausgeführt, so dass der Schmelzfluss 8.1, 8.2 auf die Rippen 15 derart trifft, dass sich die Fließfronten 9.1, 9.2 zumindest bereichsweise, im Wesentlichen aufeinander zu bewegen, so dass sich eine verzahnte Bindenaht 10 einstellt. Mit dieser Anordnung können aus zwei im wesentlichen parallel fließenden Schmelzflüssen 8.1, 8.2 zumindest Teilströme 8.11, 8.21 abgezweigt werden, die ihrerseits jeweils Fließfronten 9.1, 9.2 bilden, die sich aufeinander zu bewegen.

Was nun das Verfahren betrifft, so wird der erfindungsgemäße Kunststoffbehälter bzw. Kunststofflaugenbehälter 2 wie folgt hergestellt. Unter Verwendung einer Spritzgussform 17a, 17b wird dabei im zentralen Bereich, wie dies in der Figur 2 zu erkennen ist, in der Stirnseitenwand 7 der Kunststoff 6 in die Form 17a, 17b injiziert. Dabei stellen sich in der Form 17a, 17b Teilströme 8.1 und 8.2 bedingt durch Unstetigkeiten, wie z. B Öffnungen 3, 4, in der Form 17a, 17b ein, mit Fließfronten 9.1 und 9.2, die eine Bindenaht 10 beim Aufeinandertreffen eingehen. Dabei werden die Teilströme 8.1 und 8.2 in dem Bereich, in dem sich die Bindenaht 10 einstellt, durch das Profil der Behälterwand 13, insbesondere zu erkennen in der Figur 7, in der Spritzgussform 17a, 17b derart beeinflusst, dass die aufeinander treffenden Fließfronten 9.1 und 9.2 eine verzahnte Bindenaht 10 bilden.

Die Spritzgussform 17a, 17b besitzt in den Bereichen, in denen sich die Bindenähte 10 einstellen, Vertiefungen, die die Verrippungen 14 in der Behälterwand 13 anformen. Der erhöhte Querschnitt der jeweiligen Rippe 15 führt dazu, dass sich in Fließrichtung der Fließfronten 9.1 bzw. 9.2 des jeweiligen Teilstromes 8.1, 8.2 Strömungsdome 18.1 und 18.2 einstellen, wie dies in der Figur 6 deutlich wird. Diese Strömungsdome 18.1 und 18.2 bewegen sich in verzahnender Weise ineinander. Dabei ist zu erkennen, dass sich die aufeinander zu bewegenden Fließfronten 9.1 und 9.2 zunächst noch parallel verlaufend ausbreiten. Dabei wird die Strömungsgeschwindigkeit der viskosen Kunststoffmasse 6 des jeweiligen Teilstromes 8.1 bzw. 8.2 in den zueinander parallel eingeformten Rippen 14 erhöht, so dass die Strömungsgeschwindigkeit der viskosen Kunststoffmasse 6 des jeweiligen Teilstromes 8.1 bzw. 8.2 derart beeinflusst wird, dass infolge der zueinander parallel versetzt angeordneten Rippen 14 ein Strömungsprofil hervorgerufen wird, welches im nicht überlappenden Bereich der Rippen 14 zunächst kleine Dome 18.1 bzw.18.2 bildet, ebenfalls in der Figur 7 zu erkennen, die sich im Überlappungsbereich 16 der Rippen 14 zu verzahnenden größeren Domen 18.1 und 18.2 zusammenfügen.

## Patentansprüche

1. Kunststoffbehälter umfassend ein zylinderförmig geformtes Behältnis, welches aus einer spritzgegossenen Kunststoffmasse (6) besteht, mit einem Mantel und zumindest mit einer Stirnwand (7), und wobei sich während des Spritzgießens durch aufeinander treffende Fließfronten (9.1, 9.2) des Schmelzflusses (8.1, 8.2) der Kunststoffmasse (6) ergebende Bindenähte (10) bilden,
**dadurch gekennzeichnet,**
**dass** die Wand (13) des Kunststoffbehälters (2) in dem Bereich, in dem sich die Bindenaht (10) einstellt, ein Profil aufweist, so dass die aufeinander treffenden Fließfronten (9.1, 9.2) eine verzahnte Bindenaht (10) eingehen oder bilden.

2. Kunststoffbehälter nach Anspruch 1,
**dadurch gekennzeichnet,**
**dass** die Bindenaht (10) verrippt mit eingeformten Rippen (14, 15) ausgebildet ist, wobei die Rippen (14) in etwa quer zum Verlauf der Bindenaht (10) ausgerichtet sind.

3. Kunststoffbehälter nach Anspruch 2,
**dadurch gekennzeichnet,**
**dass** die eingeformten Rippen (14) in Fließrichtung des Schmelzflusses (8.1, 8.2), im Wesentlichen parallel zu einander ausgerichtet sind.

4. Kunststoffbehälter nach Anspruch 2 oder 3,
**dadurch gekennzeichnet,**
**dass** die Rippen (14) jeweils eine Breite von 0,5 cm bis 1 cm haben und im Abstand von 0,5 cm bis 2 cm zueinander angeordnet sind.

5. Kunststoffbehälter nach einem der Ansprüche 2 bis 4,
**dadurch gekennzeichnet,**
**dass** die Rippen (14) jeweils eine Länge im Bereich zwischen 4 cm bis 15 cm haben.

6. Kunststoffbehälter nach einem der Ansprüche 3 bis 5,
**dadurch gekennzeichnet,**
**dass** die im Wesentlichen parallel zueinander eingeformten Rippen (14, 15) versetzt zueinander angeordnet sind, so dass sie einen überlappenden Teilbereich (16) einnehmen.

7. Kunststoffbehälter nach Anspruch 6,
**dadurch gekennzeichnet,**
**dass** der überlappende Teilbereich (16) zwischen 2 cm und 6 cm beträgt.

8. Kunststoffbehälter nach einem der Ansprüche 2 bis 7,
**dadurch gekennzeichnet,**
**dass** die einzelnen Rippen (15) gekrümmt ausgeführt sind, so dass sich bei nahezu parallelen Schmelzflüssen (8.1, 8.2), die aufeinandertreffenden Fließfronten (9.1, 9.2) eine im Wesentlichen verzahnte Bindenaht (10) einstellt.

9. Kunststofflaugenbehälter (2) für eine Waschmaschine (1), umfassend einen Kunststoffbehälter nach einem der Ansprüche 1 bis 8.

10. Verfahren zur Herstellung eines Kunststoffbehälters oder Kunststofflaugenbehälters (2) für eine Waschmaschine (1), unter Verwendung einer Spritzgussform (17a, 17b), wobei der Kunststofflaugenbehälter (2) eine Behälterwand (13) mit einem zylinderförmigen Mantel und zumindest eine den Mantel verschließende Stirnseitenwand (7) aufweist, und der Kunststoff (6) im zentralen Bereich der Stirnseitenwand (7) in die Form (17a, 17b) injiziert wird, so dass sich zumindest bereichsweise Teilströme (8.1, 8.2) mit Fließfronten (9.1, 9.2) bilden, die eine Bindenaht (10) beim Aufeinandertreffen der Fließfronten (9.1, 9.2) eingehen,
**dadurch gekennzeichnet,**
**dass** die Teilströme (8.1, 8.2) durch das Profil der Spritzgussform (17,a, 17b) in dem Bereich der Behälterwand (13), in dem sich die Bindenaht (10) einstellt, derart beeinflusst werden, dass die aufeinander treffenden Fließfronten (9.1, 9.2) eine verzahnte Bindenaht (10) bilden.

11. Verfahren nach Anspruch 10,
**dadurch gekennzeichnet,**
**dass** die Spritzgussform (17a, 17b) mit stabförmigen Verrippungen (14, 15) ausgestattet ist, so dass in Fließrichtung der Fließfronten (9.1, 9.2) des jeweiligen Teilstromes (8.1, 8.2) Strömungsdome (18.1, 18.2) gebildet werden, die sich in verzahnender Weise aufeinander zu bewegen

12. Verfahren nach Anspruch 11,
**dadurch gekennzeichnet,**
**dass** die Strömungsgeschwindigkeit der viskosen Kunststoffmasse (6) des jeweiligen Teilstromes (8.1, 8.2) in den zueinander im wesentlichen parallel eingeformten Rippen (14, 15) erhöht wird.

13. Verfahren nach Anspruch 12,
**dadurch gekennzeichnet,**
**dass** die Strömungsgeschwindigkeit der viskosen Kunststoffmasse (6) des jeweiligen Teilstromes (8.1, 8.2) derart beeinflusst wird, dass infolge der zueinander parallel versetzt eingeformten Rippen (14, 15) ein Strömungsprofil hervorgerufen wird, welches im nicht überlappenden Bereich der Rippen (14, 15) zunächst kleine Dome (18.1, 18.2) bildet, die sich im Überlappungsbereich (16) der Stäbe (14, 15) in zueinander verzahnten größeren Domen (18.1, 18.2) zusammenfügen.
